# EUROPÄISCHE PATENTSCHRIFT

(11) **EP 2 844 520 B1**
(45) Veröffentlichungstag und Bekanntmachung des Hinweises auf die Patenterteilung: **29.06.2016**
(21) Anmeldenummer: 13724533.8
(22) Anmeldetag: 03.05.2013
(51) Int. Cl.: B60P 7/08

(54) **TRANSPORTFAHRZEUG**
TRANSPORT VEHICLE
VÉHICULE DE TRANSPORT

(30) Priorität: 03.05.2012 DE 202012101638 U
(43) Veröffentlichungstag der Anmeldung: 11.03.2015
(73) Patentinhaber: Westdeutscher Drahtseil-Verkauf Dolezych GmbH & Co. KG, 44147 Dortmund (DE)
(72) Erfinder: SCHÖBEL, Uwe, 58730 Fröndenberg (DE)
(74) Vertreter: Nunnenkamp, Jörg
(86) Internationale Anmeldenummer: PCT/EP2013/059255
(87) Internationale Veröffentlichungsnummer: WO 2013/164450

(56) Entgegenhaltungen:
- WO-A1-97/26146
- CA-A1- 2 450 341
- DE-A1-102005 008 618
- DE-U1-202011 005 008
- GB-A- 2 448 157

## Beschreibung

Die Erfindung betrifft ein Transportfahrzeug, insbesondere einen LKW-Auflieger, mit einem von Bordwänden, einer Transportfläche sowie ggf. einer Dachfläche begrenzten Laderaum, wobei zumindest eine Bordwand ganz oder teilweise als Sicherungsnetz aus sich kreuzenden Gurtbändern ausgebildet ist, und wobei die Gurtbänder im jeweiligen Kreuzungspunkt durch ineinandergreifende sowie jeweils gurteigene Kunststofffäden miteinander gekoppelt sind.

Transportfahrzeuge und insbesondere LKW-Auflieger ohne festen Aufbau verfügen in der Regel über sogenannte Rungen und Einstecklatten, mit deren Hilfe die jeweilige Bordwand definiert wird. In der Regel kommen Rungen und zugehörige Einstecklatten bei Seitenwänden zum Einsatz, wohingegen die Stirnwand solcher LKW-Auflieger meistens massiv ausgelegt ist. Vergleichbares gilt für die Rückwand. Die größtenteils randseitig an die Transportfläche angeschlossenen und von dieser hoch stehenden Rungen dienen in Verbindung mit den die Rungen gleichsam untereinander verbindenden Einstecklatten u. a. zur Sicherung der im Laderaum befindlichen Güter. Zusätzlich verfügt meistens auch eine den Laderaum abdeckende sowie grundsätzlich optionale Plane über entsprechende Sicherungsmaßnahmen wie beispielsweise eingenähte Gurte, zusätzliche Stangen, Latten etc. Vergleichbar wird auch bei Zuganhängern respektive sogenannten Rungenwagen verfahren.

Die Beladung und Entladung derartiger Transportfahrzeuge erfordert die Anbringung und Entfernung der Einstecklatten in zugehörigen und an den Rungen vorgesehenen Rungentaschen. Prinzipiell kann alternativ zu den Einstecklatten natürlich auch mit beispielsweise Ketten oder anderen Verbindungselementen zwischen den Rungen gearbeitet werden. Jedenfalls erfordert die Be- und Entladung mehr oder minder aufwändige vorbereitende und nachbereitende Maßnahmen. Hinzu kommt, dass die Sicherung der im Laderaum befindlichen Güter durch die Rungen und Einstecklatten alleine nicht immer ausreichend und zufriedenstellend gelingt. Das gilt besonders für rutschende und/oder wenig konturierte Ladegüter wie beispielsweise Reifen. Tatsächlich besteht hier die Gefahr, dass die Einstecklatten brechen, das Ladegut, im Beispielfall die Reifen, Zwischenräume zwischen einzelnen Einstecklatten durchdringen etc. Jedenfalls sind sowohl Be- als auch Entladearbeiten verbesserungsbedürftig ebenso wie die Ladungssicherung im Ganzen.

Zwar gibt es an dieser Stelle mit der Lehre nach der DE 20 2007 002 437 U1 bereits Ansatzpunkte dahingehend, dass eine gleichsam verstellbare Bordwand realisiert wird, um eine effektive Rückhaltefunktion zu gewährleisten. Gleichzeitig soll der Lade- und Endladevorgang so wenig wie möglich beeinträchtigt werden. Allerdings ist der konstruktive Aufwand beträchtlich.

Im weiteren Stand der Technik nach der DE 20 2008 016 326 U1 wird eine Vorrichtung zur Sicherung von Ladung auf der Ladefläche von Transporteinheiten beschrieben. Dabei kommt ein Sicherungsnetz zum Einsatz, welches an einer Seite des Transportfahrzeuges angebracht werden kann. Dieses verfügt in diesem Fall über keine feste Seitenwand und ist in der Regel zusätzlich mit einer Plane verschlossen. - Die bekannte Vorgehensweise hat sich in der Praxis jedoch nicht durchsetzen können, weil das aus Längsgurten und Quergurten bzw. aus sich kreuzenden Gurtbändern zusammengesetzte Sicherungsnetz in der Herstellung besonders kostenaufwändig gestaltet ist.

Im Rahmen des gattungsbildenden Standes der Technik nach der WO 97/26146 A1 geht es um eine flexible Wand aus plastifiziertem Leinen, die auch Bestandteil einer Fahrzeugkarosseriestruktur ist oder sein kann. Die flexible Wand weist ein Gitter auf, welches von vertikal und horizontal auf einer plastifizierten Fläche verklebten oder verschweißten Bändern gebildet ist. Die Bänder sind aus einem mit der fraglichen Fläche verträglichen PVC-artigen Material hergestellt und weisen eine durchgehende Mittelader aus einem Material vom Typ Stahl mit großer Scher- und Dehnfestigkeit auf. Auf diese Weise soll nicht nur ein Schutz und eine Absicherung der transportierten Waren zur Verfügung gestellt sondern auch das Aussehen optimiert werden. Allerdings ist die Herstellung aufwendig.

Der Erfindung liegt das technische Problem zugrunde, ein derartiges Transportfahrzeug so weiter zu entwickeln, dass der Be- und Entladevorgang vereinfacht sind, zugleich die Sicherheit gesteigert wird, und zwar bei insgesamt kostengünstigen Aufbau.

Zur Lösung dieser technischen Problemstellung ist ein gattungsgemäßes Transportfahrzeug im Rahmen der Erfindung dadurch gekennzeichnet, dass die Kunststofffäden der zu verbindenden Gurtbänder im jeweiligen Kreuzungspunkt durch eine Maschenbindung miteinander derart verbunden sind, dass Maschen des einen Gurtbandes in Kettrichtung mit Kunststofffäden des anderen Gurtbandes in Schussrichtung verbunden sind, oder umgekehrt.

D. h., die sich kreuzenden Gurtbänder sind zunächst einmal aus Kuststofffäden aufgebaut. Meistens handelt es sich um jeweils aus den Kunststofffäden gewebte Gurtbänder. Im jeweiligen Kreuzungspunkt der Gurtbänder greifen nun die jeweils gurteignen Kunststofffäden ineinander und sorgen für die mechanische Kopplung der Gurtbänder untereinander.

Die Erfindung greift also zur Verbindung der das Sicherungsnetz definierenden Gurte auf speziell gestaltete Kreuzungspunkte zurück. Denn im Bereich dieser Kreuzungspunkte greifen jeweils gurteigene Kunststofffäden ineinander, und zwar sowohl Kunststofffäden von dem einen als auch von dem anderen Gurtband. Dieses Ineinandergreifen der jeweiligen Kunststofffäden der sich kreuzenden Gurtbänder wird regelmäßig im Zuge eines industriellen Fertigungsprozesses umgesetzt, wie er beispielhaft in der DE 10 2010 031 052 A1 im Detail beschrieben wird. Hier geht es um ein Verfahren zum Herstellen von technischen Netzen und insbesondere Ladungssicherungsnetzen, bei dem Fadenscharen und Gurtbänder in Verbindungsabschnitten miteinander vermascht werden. Dadurch können die Gurtbänder von vorneherein industriell miteinander zu dem flächigen Sicherungsnetz gekoppelt werden. Nachträgliche Verbindungsmaßnahmen, wie beispielsweise ein Nähvorgang oder dergleichen, sind ausdrücklich nicht erforderlich, so dass im Vergleich zu den bisherigen Vorgehensweisen deutliche Kostenvorteile dermaßen realisierter Sicherungsnetze beobachtet werden.

Es reicht erfindungsgemäß völlig aus, wenn die Gurtbänder in gekreuzter Anordnung gemeinsam hergestellt und im Bereich ihrer jeweiligen Kreuzungspunkte durch die ineinandergreifenden und jeweils gurteigenen Kunststofffäden miteinander gekoppelt werden. Im Regelfall ist die Auslegung so getroffen, dass sich die Gurte rechtwinklig kreuzen, wenngleich von der Erfindung selbstverständlich auch von einem rechten Winkel abweichende Kreuzungswinkel abgedeckt werden und möglich sind. Dadurch wird insgesamt ein engmaschiges Sicherungsnetz zur Verfügung gestellt, welches auf kostengünstige Art und Weise eine Bordwand des erfindungsgemäßen Transportfahrzeuges ganz oder teilweise ersetzen kann. Insbesondere können Ladegüter wie Reifen oder dergleichen nicht (mehr) durch einen Spalt zwischen jeweiligen Einstecklatten hindurchrutschen, sondern werden vielmehr zuverlässig von dem Sicherungsnetz zurückgehalten.

In diesem Zusammenhang versteht es sich, dass das Sicherungsnetz mit seinen Maschen bzw. Öffnungen an die jeweils im Laderaum befindlichen Ladegüter angepasst ist, respektive angepasst werden kann. Tatsächlich wird man an dieser Stelle meistens mit quadratischen Maschen oder Öffnungen arbeiten, wenngleich natürlich auch andere Maschenformen wie beispielsweise rhombische Maschen denkbar sind und von der Erfindung umfasst werden. Auch die Auslegung der Gurte trägt den Ladegütern Rechnung. so können Gurte mit unterschiedlicher Breite eingesetzt werden. Beispielsweise ist es denkbar, breite Längsgurte und demgegenüber schmalere Quergurte bei der Realisierung des Sicherungsnetzes einzusetzen.

Die in Längsrichtung bzw. Fahrzeugrichtung orientierten Längsgurte tragen dem Umstand Rechnung, dass sie überwiegend etwaige Kräfte von Ladegütern im Laderaum aufnehmen müssen. Demgegenüber kommt den schmaleren Quergurten eine überwiegend stabilisierende bzw. füllende Funktion zwischen den breiten Längsgurten zu. Tatsächlich können die Längsgurte in diesem Zusammenhang als jeweils Einstecklattenersatz ausgebildet sein. D.h., die Längsgurte finden sich als Verbindung zwischen den einzelnen Rungen in den Bereichen, in welchen herkömmlich die Einstecklatten vorgesehen waren.

In diesem Zusammenhang ist auch ein Ersatz von Einstecklatten zwischen beispielsweise zwei benachbarten Rungen erfindungsgemäß möglich. Meistens verfügen die Gurte über angeschlossene Verbindungsmittel zur Kopplung beispielsweise mit der jeweils auf der Transportfläche aufstehenden Runge. Bei dem Verbindungsmittel kann es sich vorteilhaft und zur Realisierung des beschriebenen Ersatzes um ein solches handeln, welches mit zumindest einer Rungentasche zur Festlegung des Sicherungsnetzes an der betreffenden Runge wechselwirkt und hierzu eingerichtet ist.

Für die Kopplung der jeweils gurteigenen Kunststofffäden der miteinander zu verbindenden Gurtbänder im jeweiligen Kreuzungspunkt ist erfindungsgemäß die Maschenbindung vorgesehen. Eine solche Maschenbindung ist durch die Kopplung einzelner Maschen untereinander gekennzeichnet. Bei einer Masche handelt es sich bekanntermaßen um eine Faden-Schlinge, die in andere Fadenschlingen eingehängt wird. Dadurch entstehen Strick- oder Wirkwaren. Die Maschen sind typischerweise miteinander durch vier Bindungsstellen verbunden.

Im Rahmen der Erfindung handelt es sich bei der Maschenbindung bzw. Maschinenverbindung vorteilhaft um eine Wirkverbindung. Die Maschenbindung ist also eine Wirkbindung bzw. Wirkverbindung, so dass die Kreuzung der beiden Gurtbänder mit Hilfe einer Wirkmaschine erfolgen kann. Bei einer Wirkverbindung sind die einzelnen Fadenschlingen wie bei jeder Maschenbindung ineinander geschlungen. Allerdings zeichnet sich die Wirkverbindung und folglich ein Gewirke an dieser Stelle dadurch aus, dass die die Maschen bildenden Kunststofffäden übereinander stehen und der Kunststofffaden senkrecht verläuft.

Im Kreuzungspunkt zwischen den beiden zu koppelnden Gurtbändern kommt es nun zu einer speziellen Wirkverbindung. Denn die Maschen des einen Gurtbandes in Kettrichtung sind mit Kunststofffäden des anderen Gurtbandes in Schussrichtung verbunden. Grundsätzlich kann auch umgekehrt vorgegangen werden. Das heißt, das eine Gurtband bildet Maschen in Kettrichtung aus, respektive ist schon von vornherein bei seiner Herstellung mit solchen Maschen in Kettrichtung ausgerüstet. Diese Maschen in Kettrichtung des einen Gurtbandes sind quasi mit den Kunststofffäden des anderen Gurtbandes in Schussrichtung verbunden, so dass im Kreuzungspunkt eine spezielle Wirkverbindung hergestellt wird bzw. eine Art kombinierte Wirk-/Webverbindung entsteht.

Grundsätzlich kann natürlich auch umgekehrt vorgegangen werden. Dann sind die Maschen des einen Gurtbandes in der Schussrichtung angeordnet, wohingegen die Kunststofffäden in der Kettrichtung des anderen Gurtbandes verlaufen und auf diese Weise mit den Maschen des betreffenden anderen Gurtbandes in Schussrichtung verbunden werden. Dabei wird im Detail eine Art Kettenwirkverbindung hergestellt, bei welcher die Fäden des einen Gurtbandes vertikal verlaufen und von Nadeln der Wirkmaschine ergriffen sowie durch vorhergehende Maschen gezogen werden. Dadurch wird eine Fläche gebildet und es liegen nicht einzelne Maschenbänder bzw. Luftmaschen vor, was grundsätzlich auch möglich ist.

Jedenfalls werden im Bereich des wenigstens einen Kreuzungspunktes die beiden zu koppelnden Gurtbänder miteinander verwirkt bzw. durch eine Wirkverbindung miteinander gekoppelt und demzufolge eine Verbindung auf Basis jeweils gurteigener Kunststofffäden der zugehörigen Gurtbänder zur Verfügung gestellt. Die Herstellung der durch Weben erzeugten Gurtbänder und deren Verbindung bzw. Wirkverbindung in den Kreuzungspunkten erfolgt industriell in einem Zug. Dadurch können zusätzliche Herstellungs- und Montagemaßnahmen entfallen und lässt sich das flächige Sicherungsnetz besonders einfach und kostengünstig produzieren.

Im Allgemeinen schneiden sich die Gurtbänder jeweils rechtwinklig in den Kreuzungspunkten. Außerdem sind die Kunststofffäden typischerweise als Polyesterfäden ausgebildet. Solche Polyesterfäden zeichnen sich durch hohe Festigkeit und geringen Abrieb aus, sind also für den beschriebenen Einsatzzweck prädestiniert. Außerdem lassen sich derartige Gurtbänder problemlos farbig auslegen, um eine Unterscheidung der einzelnen Sicherungsnetze untereinander und deren Abringung unmittelbar transparent und deutlich machen zu können.

Die Gurtbänder sind typischerweise mit einer Festigkeit von wenigstens ca. 2.000 daN ausgerüstet. Meistens werden sogar Festigkeiten von mehr als ca. 2.500 daN beobachtet. Dadurch können auch schwere und leicht verrutschende Lasten bzw. Ladegüter mit Hilfe des erfindungsgemäßen Sicherungsnetzes auf der Transportfläche sicher gehalten werden.

Wie bereits erläutert, fungiert das Sicherungsnetz im Rahmen der Erfindung ganz oder teilweise als Ersatz für eine Bordwand. Dabei können einzelne oder sämtliche Bordwände des Transportfahrzeuges als jeweils Sicherungsnetz ausgelegt sein. Es ist auch möglich, die beiden Seitenwände des Laderaumes jeweils als ein einziges und durchgängiges Sicherungsnetz auszulegen. Demgegenüber sind meistens die Stirnwand und die Rückwand massiv ausgebildet. Vergleichbares gilt für die optionale Dachfläche. Denn selbstverständlich umfasst die Erfindung auch Transportfahrzeuge, die nach oben hin offen ausgelegt sind, folglich über keine Dachfläche verfügen.

Für die Festlegung des Sicherungsnetzes stehen typischerweise nicht nur die randseitig an die Transportfläche angeschlossenen Rungen zur Verfügung. Sondern meistens sind auch Längsträger der Dachfläche vorgesehen, die als Fixierungs- bzw. Ankerpunkte fungieren. Mit Hilfe der Längsträger werden die einzelnen Rungen oberseitig miteinander verbunden. Außerdem stellen die Längsträger eine durchgängige Verbindung zwischen der Stirnwand und der Rückwand her. Ergänzend oder zusätzlich wird das Sicherungsnetz auch an die Transportfläche angeschlossen. Hier empfehlen sich ohnehin auf der Transportfläche vorgesehene Zurrösen oder allgemein Zurrpunkte als Anschlusspunkte für das Sicherungsnetz.

Ergänzend zu dem einen oder den mehreren Sicherungsnetzen kann das Transportfahrzeug auch mit einer zusätzlichen Plane als Wetterschutz zur Abdeckung des Laderaumes ausgerüstet werden. Durch den erfindungsgemäßen Rückgriff auf das Sicherungsnetz lässt sich die Plane besonders einfach und kostengünstig auslegen, weil sie im Rahmen der Erfindung keine zusätzliche Sicherung der Ladegüter mehr übernehmen muss. Vielmehr kommt der Plane einzig und allein die Funktion als Wetterschutz zu.

Sofern es sich bei dem Transportfahrzeug erfindungsgemäß um einen LKW-Auflieger handelt, ist dieser regelmäßig als Schiebeplanenauflieger bzw. Curtainsider. ausgelegt Hierbei handelt sich um eine spezielle Ausführungsform eines Sattelaufliegers mit einer seitlichen Schiebeplane. Derartige Sattelauflieger werden auch als Tautliner beschrieben. In diesem Zusammenhang sind Seitenvorhänge an den jeweiligen Seitenwänden realisiert, welche als Schiebeplane an ihrer Unterkante an der Transportfläche mit Schnallen festgezurrt werden können.

Im Ergebnis wird ein Transportfahrzeug zur Verfügung gestellt, welches mit speziell ausgelegten Bordwänden in Gestalt von Sicherungsnetzen ausgerüstet ist. Dadurch erfahren die auf der Transportfläche aufgenommenen Ladegüter eine besondere Sicherung und werden engmaschig im Laderaum zurückgehalten. Die an dieser Stelle eingesetzten Sicherungsnetze können als Ersatz vorhandener Bordwände eingesetzt werden und/oder lassen sich auch durchgängig zur Realisierung gesamter Seitenwände solcher Transportfahrzeuge einsetzen. In diesem Fall kann dann auch die Anzahl der Rungen im Bereich der jeweiligen Seitenwand gegenüber bisherigen Vorgehensweisen reduziert werden.

Die sich kreuzenden Gurtbänder zur Realisierung des Sicherungsnetzes können mit jeweils gleicher Breite und folglich symmetrisch ausgelegt sein. Genauso gut umfasst die Erfindung aber auch asymmetrische Ausführungsformen, bei welchen mit unterschiedlichen Gurtbreiten gearbeitet wird. Typischerweise wird man in diesem Fall die Längsgurtbänder breiter als die Quergurtbänder auslegen.

Das erfindungsgemäß eingesetzte Sicherungsnetz zeichnet sich dadurch aus, dass die Gurtbänder im jeweiligen Kreuzungspunkt durch ineinandergreifende und jeweils gurteigene Kunststofffäden miteinander gekoppelt sind. D. h., das Sicherungsnetz mit den sich kreuzenden Gurtbändern wird industriell und in einem Zug gefertigt. Bisher an dieser Stelle eingesetzte Verbindungstechniken wie beispielsweise ein Vernähen der Gurtbänder im Kreuzungspunkt erübrigt sich. Dadurch kann das jeweils flächige Sicherungsnetz besonders kostengünstig hergestellt und montiert werden. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: ein erfindungsgemäßes Transportfahrzeug schematisch und
- Fig. 2: eine Detailansicht des eingesetzten Sicherungsnetzes.

In den Figuren ist ein Transportfahrzeug dargestellt, bei dem es sich im gezeigten Ausführungsbeispiel um einen LKW-Auflieger 1 allgemein und speziell einen Schiebeplanenauflieger 1 handelt. Grundsätzlich kann das Transportfahrzeug aber auch als Schienenfahrzeug ausgelegt sein. Ebenso sind Varianten derart denkbar, dass das Transportfahrzeug als Anhänger, insbesondere LKW-Anhänger, ausgebildet ist.

In sämtlichen Fällen verfügt das dargestellte Transportfahrzeug über Bordwände 2, 3, 4, eine Transportfläche 5 und eine optionale Dachfläche 6, die für den Fall entbehrlich ist, dass mit einem nach oben hin offenen Laderaum 7 gearbeitet wird. Im dargestellten Beispielfall wird der quaderförmige Laderaum 7 jedoch von einer Stirnwand 2, einer Rückwand 3, zwei Seitenwänden 4, einer Transportfläche 5 und schließlich der Dachfläche 6 begrenzt.

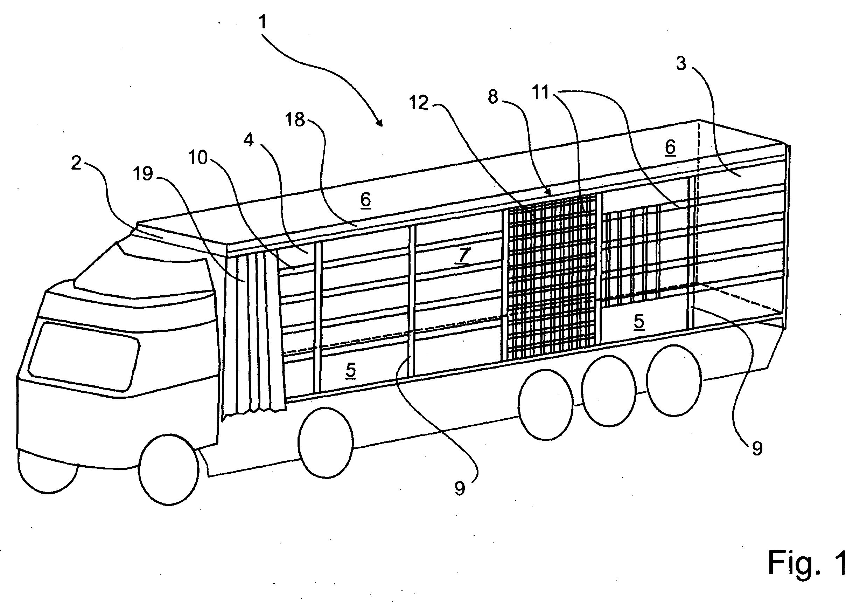

Man erkennt, dass eine Bordwand 2, 3, 4, im Ausführungsbeispiel und nicht einschränkend die in Fahrtrichtung linke Seitenwand 4, ganz oder teilweise als Sicherungsnetz 8 ausgebildet ist bzw. ein solches Sicherungsnetz 8 aufweist. Im Ausführungsbeispiel nach der Figur 1 sind lediglich beispielhaft zwei Sicherungsnetze 8 als teilweisen Ersatz der in Fahrtrichtung linken Seitenwand 4 realisiert. Da gegen ist die übrige linke Seitenwand 4 ebenso wie die rechte Seitenwand 4 herkömmlich aufgebaut und verfügt zu diesem Zweck über senkrecht auf der Transportfläche 5 aufstehende bzw. randseitig an diese angeschlossene Rungen 9 und die einzelnen Rungen 9 miteinander verbindende Einstecklatten 10.

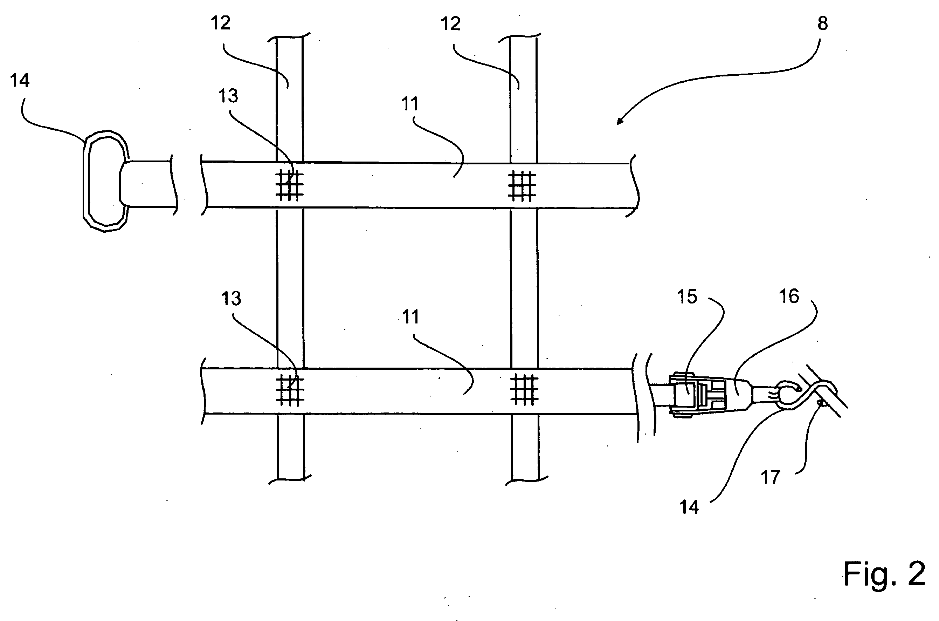

Anhand der vergrößerten Darstellung nach Figur 2 erkennt man, dass das jeweilige Sicherungsnetz 8 aus sich kreuzenden Gurten bzw. Gurtbändern 11, 12 ausgebildet ist. Tatsächlich sind an dieser Stelle Längsgurte 11 und Quergurte 12 vorgesehen, die in zugehörigen Kreuzungspunkten 13 miteinander gekoppelt sind. Im Rahmen der Erfindung erfolgt die Kopplung der jeweiligen Gurtbänder 11, 12 im zugehörigen Kreuzungspunkt 13 durch jeweils ineinandergreifende gurteigene Kunststofffäden. Zu diesem Zweck sind die betreffenden Kunststofffäden der zu verbindenden Gurtbänder 11, 12 im jeweiligen Kreuzungspunkt 13 durch eine Maschenbindung miteinander verbunden. Bei der Maschenbindung handelt es sich im Ausführungsbeispiel um eine Wirkverbindung.

Die einzelnen Gurtbänder 11, 12 sind jeweils als gewebte oder gewirkte Bänder 11, 12 aus den Kunststofffäden ausgebildet. Tatsächlich handelt es sich bei den Gurtbändern 11, 12 um Flachbänder, die über eine Breite von ca. 20 mm bis 30 mm verfügen. Ihre Stärke liegt im Bereich von ca. 1 mm bis 3 mm. Die Gurtbänder 11, 12 können insgesamt farbig ausgelegt werden, um auf diese Weise das mit ihrer Hilfe realisierte Sicherungsnetz 8 unschwer kenntlich zu machen. Außerdem kann durch die farbige Auslegung auf materialspezifische Besonderheiten hingewiesen werden. Die einzelnen Gurtbänder 11, 12 verfügen typischerweise über eine Festigkeit von wenigstens ca. 2000 daN. Bei den eingesetzten Kunststofffäden zu ihrer Realisierung handelt es sich regelmäßig um Polyesterfäden.

Die Gurtbänder 11, 12 schneiden sich jeweils rechtwinklig in den Kreuzungspunkten 13. Grundsätzlich ist es natürlich auch möglich, dass die Gurtbänder 11, 12 in den Kreuzungspunkten 13 winklig und nicht notwendigerweise rechtwinklig miteinander verbunden sind. Auf diese Weise formen die Gurtbänder 11, 12 das bereits angesprochene Sicherungsnetz 8, welches ganz oder teilweise als Ersatz der Bordwände 2, 3, 4 dient.

Zur Festlegung der Gurtbänder 11, 12 bzw. des Sicherungsnetzes 8 an den Rungen 9 sind Verbindungsmittel 14 vorgesehen. Hierbei handelt es sich im Ausführungsbeispiel um Ösen 14, die mit den Rungen 9 gekoppelt werden. Selbstverständlich sind auch andere Verbindungsmittel 14 denkbar und werden von der Erfindung umfasst, beispielsweise solche Verbindungsmittel, die sich mit Einstecklaschen für die jeweiligen Einstecklatten 10 lösbar koppeln lassen.

Ganz abgesehen davon können einzelne Gurtbänder 11, 12 auch Losenden ausbilden. Das ist in der Figur 2 rechts unten dargestellt. Diese Losenden mögen mit zugehörigen Festenden 15, 16 zusammen wirken. Dazu wird das jeweilige Losende des betreffenden Gurtes 11, 12, im Ausführungsbeispiel des unteren Längsgurtes 11, in eine Ratsche 15 oder eine vergleichbare Spannvorrichtung eingefädelt. Mit Hilfe der Ratsche 15 wird dann der betreffende Längsgurt 11 unter Zwischenschaltung eines eigenen Gurtbandes 16 sowie eines S-förmigen Verbindungsmittels 14 an einem Zurrpunkt 17 festgelegt. Dieser Zurrpunkt 17 kann auf oder an der Ladefläche 5 vorhanden sein.

Die jeweiligen Gurtbänder 11, 12 sind im zugehörigen Kreuzungspunkt 13 durch ineinander greifende und jeweils gurteigene Kunststofffäden miteinander gekoppelt. D.h., der betreffende Kreuzungspunkt 13 zeichnet sich dadurch aus, dass an ihm Kunststofffäden sowohl des Längsgurtes 11 als auch des anderen korrespondierenden Quergurtes 12 ineinandergreifen. Durch dieses Ineinandergreifen der jeweils gurteigenen Kunststofffäden der beiden am Kreuzungspunkt 13 miteinander verbundenen Gurtbänder 11, 12 wird ein besonders inniger Verbund zur Verfügung gestellt. Außerdem sind zusätzliche Sicherungsmaßnahmen hierdurch nicht erforderlich. Tatsächlich greift die Erfindung an dieser Stelle auf eine Maschenbindung zwischen den beiden Gurtbändern 11, 12 zurück und speziell eine Wirkverbindung. Dadurch wird eine relativ große Elastizität bei der Kopplung der beiden Gurtbänder 11, 12 untereinander realisiert. Dennoch werden vergleichbare Festigkeiten wie bei einem Gewebe zur Verfügung gestellt, weil letztlich eine kombinierte Wirk-/Webverbindung im Bereich des jeweiligen Kreuzungspunktes 13 hergestellt wird.

Wie bereits erläutert, können einzelne oder sämtliche Bordwände 2, 3, 4 als jeweils Sicherungsnetz 8 ausgelegt sein. Zu diesem Zweck wird das Sicherungsnetz 8 randseitig an die zugehörige Runge 9 angeschlossen. Alternativ oder zusätzlich ist aber auch ein Anschluss des Sicherungsnetzes 8 an einen Längsträger 18 der Dachfläche 6 möglich. Im Ausführungsbeispiel sind zwei durchgängige Längsträger 18 vorgesehen, welche die massiv ausgelegte Stirnwand 2 mit der Rückwand 3 koppeln. Bei der Rückwand 3 handelt es sich um zwei Schwenkklappen. Zusätzlich zur Befestigung des Sicherungsnetzes 8 an der jeweiligen Runge 9 respektive dem Längsträger 18 der Dachfläche 6 ist alternativ oder zusätzlich auch eine Festlegung an der Transportfläche 5 bzw. den dortigen Zurrpunkten 17 möglich, wie dies mit Bezug zur Figur 2 bereits erläutert wurde. Hier kann dann auf die bereits beschriebene Spannvorrichtung respektive Ratsche 15 im Beispielfall zurückgegriffen werden.

Zusätzlich erkennt man in der Figur 1 noch eine Plane 19, die als Schiebeplane ausgebildet ist. Tatsächlich kann die Plane 19 in der Art einer Gardine oder auch als Seitenvorgang entlang des jeweiligen Längsträgers 18 an der Seitenwand 4 geführt werden. Dadurch lässt sich die Transportfläche 5 problemlos von der Seite her beladen, wenn im Beispielfall das jeweilige Sicherungsnetz 8 bzw. die Einstecklatten 10 entfernt worden sind.

Schließlich erkennt man in der Figur 1, dass die Gurtbänder 11, 12 des Sicherungsnetzes 8 unterschiedlich ausgebildet sein können. Tatsächlich verfügen die Längsgurte 11 und Quergurte 12 beim linken Sicherungsnetz 8 in der Darstellung nach Figur 1 über eine vergleichbare Breite. Dahingegen sind die Längsgurte 11 beim rechts daneben angeordneten Sicherungsnetz 8 deutlich breiter als die zugehörigen Quergurte 12 ausgelegt. Außerdem erkennt man, dass die Längsgurte 11 in diesem Beispielfall als Einstecklattenersatz fungieren, d. h., als Ersatz der alternativ einsetzbaren Einstecklatten 10 ausgebildet sind. Zu diesem Zweck werden bei dem rechten Sicherungsnetz 8 die jeweiligen Längsgurte 11 mit Einstecktaschen randseitig lösbar verbunden, die normalerweise als Aufnahme für die Einstecklatten 10 fungieren. Das ist selbstverständlich nur beispielhaft zu verstehen und nicht zwingend.

## Patentansprüche

1. Transportfahrzeug, insbesondere LKW-Auflieger (1), mit einem von Bordwänden (2, 3, 4), einer Transportfläche (5) sowie gegebenenfalls einer Dachfläche (6) begrenzten Laderaum (7), wobei zumindest eine Bordwand (4) ganz oder teilweise als Sicherungsnetz (8) aus sich kreuzenden Gurtbändern (11, 12) ausgebildet ist, und wobei die Gurtbänder (11, 12) im jeweiligen Kreuzungspunkt (13) durch ineinandergreifende sowie jeweils gurteigene Kunststofffäden mit einander gekoppelt sind,
**dadurch gekennzeichnet, dass**
die Kunststofffäden der zu verbindenden Gurtbänder (11, 12) im jeweiligen Kreuzungspunkt (13) durch eine Maschenbindung miteinander derart verbunden sind, dass Maschen des einen Gurtbandes (12) in Kettrichtung mit Kunststofffäden des anderen Gurtbandes (11) in Schussrichtung verbunden sind, oder umgekehrt.

2. Transportfahrzeug nach Anspruch 1, **dadurch gekennzeichnet, dass** es sich bei der Maschenbindung um eine Wirkverbindung handelt.

3. Transportfahrzeug nach Anspruch 1 oder 2, **dadurch gekennzeichnet, dass** sich die Gurtbänder (11, 12) jeweils rechtwinklig in den Kreuzungspunkten (13) schneiden.

4. Transportfahrzeug nach einem der Ansprüche 1 bis 3, **dadurch** - **gekennzeichnet,** dass die Kunststofffäden als Polyesterfäden ausgebildet sind.

5. Transportfahrzeug nach einem der Ansprüche 1 bis 4, **dadurch gekennzeichnet, dass** die Gurtbänder (11, 12) eine Festigkeit von wenigstens ca. 2000 daN aufweisen.

6. Transportfahrzeug nach einem der Ansprüche 1 bis 5, **dadurch gekennzeichnet, dass** die Gurtbänder (11, 12) farbig ausgelegt sind.

7. Transportfahrzeug nach einem der Ansprüche 1 bis 6, **dadurch gekennzeichnet, dass** die Gurtbänder (11, 12) als Flachbänder mit einer Breite von ca. 20 mm bis 40 mm und einer Stärke von ca. 1 mm bis 3 mm ausgebildet sind.

8. Transportfahrzeug nach einem der Ansprüche 1 bis 7, **dadurch gekennzeichnet, dass** die Verbindungsmittel (14) zur Kopplung beispielsweise mit jeweils einer auf der Transportfläche (5) aufstehenden Runge (9) aufweisen.

9. Transportfahrzeug nach Anspruch 8, **dadurch gekennzeichnet, dass** das Verbindungsmittel (14) mit zumindest einer Rungentasche zur Festlegung des Sicherungsnetzes (8) an der betreffenden Runge (9) wechselwirkt.

10. Transportfahrzeug nach einem der Ansprüche 1 bis 9, **dadurch gekennzeichnet, dass** die Gurtbänder (11, 12) mit unterschiedlichen Breiten ausgerüstet sind, beispielsweise als breite Längsgurte (11) und demgegenüber schmalere Quergurte (12).

11. Transportfahrzeug nach einem der Ansprüche 1 bis 10, **dadurch gekennzeichnet, dass** die Längsgurte (11) jeweils als Einstecklattenersatz ausgebildet sind.

12. Transportfahrzeug nach einem der Ansprüche 1 bis 11, **dadurch gekennzeichnet, dass** einzelne oder sämtliche Bordwände (2, 3, 4) als jeweils Sicherungsnetz (8) ausgelegt sind.

13. Transportfahrzeug nach einem der Ansprüche 1 bis 12, **dadurch gekennzeichnet, dass** das Sicherungsnetz (8) randseitig an jeweils eine Runge (9) und/oder einen Längsträger (18) der Dachfläche (6) und/oder die Transportfläche (5) angeschlossen ist.

## Claims

1. A transport vehicle, particularly a lorry trailer (1), having a loading space (7) delimited by side walls (2, 3, 4), a transport area (5) and also possibly a roof area (6), wherein at least one side wall (4) is completely or partially constructed as a safety net (8) made up of criss-crossing straps (11, 12), and wherein the straps (11, 12) are coupled to one another at the respective crossing point (13) by inter-engaging plastic fibres, which are respectively integrated in the straps,
**characterised in that**
the plastic fibres of the straps (11, 12) to be connected at the respective crossing point (13) are connected to one another by means of mesh binding in such a manner that meshes of the one strap (12) in the warp direction are connected to plastic fibres of the other strap (11) in the weft direction, or vice versa.

2. The transport vehicle according to Claim 1, **characterised in that** the mesh binding is an effective connection.

3. The transport vehicle according to Claim 1 or 2, **characterised in that** the straps (11, 12) intersect in each case at right angles at the crossing points (13).

4. The transport vehicle according to one of Claims 1 to 3, **characterised in that** the plastic fibres are constructed as polyester fibres.

5. The transport vehicle according to one of Claims 1 to 4, **characterised in that** the straps (11, 12) have a strength of at least 2000 daN.

6. The transport vehicle according to one of Claims 1 to 5, **characterised in that** the straps (11, 12) have a coloured design.

7. The transport vehicle according to one of Claims 1 to 6, **characterised in that** the straps (11, 12) are constructed as flat belts with a width of approx. 20 mm to 40 mm and a thickness of approx. 1 mm to 3 mm.

8. The transport vehicle according to one of Claims 1 to 7, **characterised in that** it has connecting means (14) for coupling for example to in each case one stanchion (9) standing on the transport area (5).

9. The transport vehicle according to Claim 8, **characterised in that** the connecting means (14) interacts with at least one stanchion pocket for fastening the safety net (8) on the relevant stanchion (9).

10. The transport vehicle according to one of Claims 1 to 9, **characterised in that** the straps (11, 12) are equipped with different widths, for example as wide longitudinal belts (11) and, by contrast, narrower transverse belts (12).

11. The transport vehicle according to one of Claims 1 to 10, **characterised in that** the longitudinal belts (11) are in each case constructed as a plug-in slat set.

12. The transport vehicle according to one of Claims 1 to 11, **characterised in that** individual or all of the side walls (2, 3, 4) are designed as a safety net (8) in each case.

13. The transport vehicle according to one of Claims 1 to 12, **characterised in that** the safety net (8) is connected in each case at the edge to one stanchion (9) and/or a longitudinal support (18) of the roof area (6), and/or the transport area (5).

## Revendications

1. Véhicule de transport, en particulier semi-remorque de véhicule utilitaire (1), avec un espace de chargement (7) délimité par des hayons (2, 3, 4), une surface de transport (5) ainsi que, le cas échéant, une surface de toit (6), dans lequel au moins un hayon (4) est réalisé entièrement ou partiellement en tant que filet de sécurité (8) formé par des sangles (11, 12) se croisant, et dans lequel les sangles (11, 12) sont couplées ensemble au point de croisement (13) respectif grâce à des fils en matière synthétique en prise les uns avec les autres et respectivement propres à chaque sangle,
**caractérisé en ce que**
les fils en matière synthétique des sangles (11, 12) à relier au point de croisement (13) respectif sont reliés ensemble grâce à une armure de maillage de telle sorte que des mailles de l'une des sangles (12) sont reliées en direction de chaîne à des fils en matière synthétique de l'autre sangle (11) en direction de trame, ou vis-versa.

2. Véhicule de transport selon la revendication 1, **caractérisé en ce que**, en ce qui concerne l'armure de maillage, il s'agit d'une liaison effective.

3. Véhicule de transport selon la revendication 1 ou 2, **caractérisé en ce que** les sangles (11, 12) se coupent respectivement en angle droit aux points d'intersection (13).

4. Véhicule de transport selon l'une des revendications 1 à 3, **caractérisé en ce que** les fils en matière synthétique sont réalisés en tant que fils en polyester.

5. Véhicule de transport selon l'une des revendications 1 à 4, **caractérisé en ce que** les sangles (11, 12) présentent une solidité d'au moins environ 2000 daN.

6. Véhicule de transport selon l'une des revendications 1 à 6, **caractérisé en ce que** les sangles (11, 12) sont prévues en couleur.

7. Véhicule de transport selon l'une des revendications 1 à 6, **caractérisé en ce que** les sangles (11, 12) sont réalisées en tant que bandes plates d'une largeur de près de 20 mm à 40 mm et d'une épaisseur de près de 1 mm 3 mm.

8. Véhicule de transport selon l'une des revendications 1 à 7, **caractérisé en ce que** les moyens de liaison (14) pour le couplage présentent par exemple respectivement un rancher (9) dressé sur la surface de transport (5).

9. Véhicule de transport selon la revendication 8, **caractérisé en ce que** le moyen de liaison (14) interagit avec au moins une poche de rancher pour la fixation du filet de sécurité (8) sur le rancher (9) concerné.

10. Véhicule de transport selon l'une des revendications 1 à 9, **caractérisé en ce que** les sangles (11, 12) sont fournies avec des largeurs différentes, par exemple en tant que sangles longitudinales larges (11) et sangles transversales (12) comparativement plus étroites.

11. Véhicule de transport selon l'une des revendications 1 à 10, **caractérisé en ce que** les sangles longitudinales (11) sont respectivement réalisées en tant que pièce de rechange de latte d'insertion.

12. Véhicule de transport selon l'une des revendications 1 à 11, **caractérisé en ce que** des hayons (2, 3, 4) individuels ou l'ensemble de ceux-ci sont respectivement étudiés en tant que filet de sécurité (8).

13. Véhicule de transport selon l'une des revendications 1 à 12, **caractérisé en ce que** le filet de sécurité (8) est respectivement raccordé du côté du bord à un rancher (9) et/ou à un support longitudinal (18) de la surface de toit (6) et/ou à la surface de transport (5).
